# FASCICULE DE BREVET EUROPEEN

(11) **EP 0 947 369 B1**
(45) Date de publication et mention de la délivrance du brevet: **06.08.2003**
(21) Numéro de dépôt: 99420085.5
(22) Date de dépôt: 01.04.1999
(51) Int. Cl.: B60K 15/077

(54) **Ensemble de pompage de carburant et réservoir de véhicule automobile équipé d'un tel ensemble**
Kraftstoffpumpenanordnung und mit solcher Anordnung versehener Kraftfahrzeugtank
Fuel pump arrangement and motor vehicle equipped with such an arrangement

(30) Priorité: 02.04.1998 FR 9804333
(43) Date de publication de la demande: 06.10.1999
(73) Titulaire: AISAN BITRON EUROPE SA, 58000 Nevers (FR)
(72) Inventeur: Martin, Pascal, Résid.Pierre de Courteway App C 9, 58000 Nevers (FR)
(74) Mandataire: Myon, Gérard Jean-Pierre

(56) Documents cités:
- FR-A- 2 737 539

## Description

L'invention a trait à un ensemble de pompage de carburant vers un moteur à combustion interne et à un réservoir de véhicule automobile équipé d'un tel ensemble.

Un ensemble de pompage de carburant à l'intérieur d'un réservoir comprend généralement une pompe, un bac de stockage d'une réserve de carburant, un ou plusieurs filtres, des moyens de régulation de la pression du carburant et de mesure du niveau de carburant contenu dans le réservoir. Des éléments de sécurité ou d'isolation acoustique annexes peuvent également être prévus.

Certains des éléments énumérés ci-dessus pourraient être installés en dehors du réservoir de carburant. Cependant, il est particulièrement avantageux de pouvoir les loger tous, y compris leurs moyens de connexion, à l'intérieur de ce réservoir pour des raisons de sécurité. En effet, une éventuelle fuite ou rupture d'un composant est confinée à l'intérieur de l'enceinte du réservoir.

Chacun de ces composants pris séparément occupe un volume difficilement réductible du fait des technologies et des matériaux employés. Par exemple, les dimensions du moteur électrique de la pompe sont déterminées par la puissance de pompage demandée. De même, le volume des filtres est lié aux surfaces de média filtrant nécessaires, alors que l'autonomie souhaitée impose le volume du bac de réserve. Les passages de carburant doivent avoir une section minimale, les parois des composants sous pression doivent être d'une épaisseur suffisante.

De plus, la position de certains composants encombrants est souvent imposée. Par exemple, la pompe et sa crépine doivent être au plus près du fond du réservoir, alors que le dispositif de jaugeage ou de mesure de niveau de niveau de carburant, qui comprend généralement un bras solidaire d'un flotteur, doit se trouver dans une zone libre à l'intérieur du réservoir. Cette zone est par ailleurs limitée du fait des formes complexes du réservoir qui doit être logé entre divers éléments de structure du châssis du véhicule. Les interconnexions et les fixations mécaniques des composants énumérées ci-dessus augmentent encore l'encombrement du tout, de sorte que le volume total d'un ensemble de pompage ne peut généralement pas être réduit en deçà d'une certaine limite.

Or, un ensemble de pompage est introduit à l'intérieur du réservoir par un orifice, couramment dénommé "trou de bonde", dont les dimensions doivent être conservées relativement faibles, car cet orifice crée une discontinuité dans la paroi étanche du réservoir qui diminue son étanchéité et sa résistance mécanique.

Par ailleurs, la hauteur d'un réservoir de carburant peut être faible, par exemple inférieure à 20 cm, dans les véhicules modernes où le réservoir est positionné dans l'espace laissé libre par les autres éléments de structures ou de motorisation du véhicule.

Compte tenu de ce qui précède, le volume intérieur du réservoir, qui est accessible à partir de l'extérieur à travers le "trou de bonde" et qui est situé au droit de cet orifice, peut être de dimensions relativement faibles, de sorte qu'il est délicat d'y loger les différents éléments constitutifs de l'ensemble de pompage.

En outre, un tel ensemble doit pouvoir être retiré et réintroduit dans le réservoir, notamment pour des opérations de réparation ou de maintenance.

En particulier, lorsque l'ensemble comprend un dispositif de mesure du niveau de carburant du type à levier et flotteur, il est presque toujours nécessaire de reporter le flotteur de ce dispositif en dehors du volume directement accessible à travers le "tour de bonde". Ceci oblige à conformer le bras reliant le flotteur à l'organe de mesure avec une forme gauche ou coudée pour permettre l'introduction du flotteur dans le réservoir. Dans tous les cas, cette introduction doit être effectuée avec le plus grand soin et une partie du volume directement accessible ne peut être utilisée pour loger les composants à cause du débattement angulaire nécessaire à l'introduction du flotteur et du bras dans une partie du réservoir non directement accessible à travers le trou de bonde depuis l'extérieur.

La figure 10 montre les différentes étapes d'introduction d'un ensemble de pompage 101 conforme à l'art antérieur à l'intérieur d'un réservoir 102. Cet ensemble comprend un dispositif 103 de "jaugeage" ou de mesure du niveau de carburant équipé d'un flotteur 104 positionné à l'extrémité d'un bras coudé 105 articulé sur le dispositif 103. Compte tenu de l'encombrement du bras 105 et du flotteur 104, le diamètre utile maximum du corps de l'ensemble 101 est inférieur au diamètre nominal D du trou de bonde 102a du réservoir 102. Ainsi, le volume V directement accessible à travers le trou de bonde 102a ne peut pas être complètement être utilisé pour le logement de l'ensemble 101.

Compte tenu des limites envisagées ci-dessus à la miniaturisation de l'ensemble de pompage 101, il est alors nécessaire de conserver une hauteur intérieure H du réservoir 102 ou un diamètre D du trou de bondes 102a relativement importants, ce qui peut ne pas être compatible avec l'utilisation recherchée pour le réservoir.

FR-A-2 737 539 divulgue un ensemble de transfert de carburant correspondant au préambule de la revendication 1, dans lequel la liaison entre une bride et une cuve est réalisée par un élément en forme de tige-ressort qui a pour fonction de maintenir un écart pratiquement déterminé entre la bride et la cuve. L'encombrement sensiblement constant de cet ensemble, qui résulte de la nature de cette liaison, gêne la mise en place de l'ensemble. De plus après sa mise en place, la cuve, qui porte l'essentiel des éléments actifs de l'ensemble, est susceptible de mouvements parasites par rapport au réservoir, à cause de l'élasticité de la liaison utilisée.

C'est à ces inconvénients qu'entend plus particulièrement remédier l'invention en proposant un ensemble de pompage pouvant être installé dans des réservoirs de faible hauteur et dont le trou de bonde est de section ou de diamètre relativement faible, alors qu'il est correctement maintenu en position après mise en place.

Dans cet esprit, l'invention concerne un ensemble de pompage de carburant à l'intérieur d'un réservoir de véhicule automobile dans lequel il est introduit par un orifice, comprenant un corps principal, prévu pour être logé dans un volume de réception défini au droit de cet orifice, et un corps secondaire, prévu pour être logé dans le réservoir à l'extérieur de ce volume de réception et portant des moyens de mesure du niveau de carburant dans le réservoir, caractérisé en ce que le corps secondaire est articulé par rapport au corps principal, de telle sorte qu'il peut être escamoté lors de l'introduction ou lors de la dépose de l'ensemble dans le réservoir, ce corps secondaire étant apte à être immobilisé par ce corps principal contre le fond du réservoir.

Grâce à l'invention, il est possible d'utiliser la totalité du volume défini au droit de l'orifice, c'est-à-dire directement accessible à travers le trou de bonde, pour loger le corps principal de l'ensemble de pompage. Ainsi, les dimensions de ce volume défini au droit de cet orifice peuvent être réduites par rapport à celles des réservoirs de l'art antérieur car le corps principal a des dimensions sensiblement égales à celle du volume de réception. De plus, le corps secondaire peut être fermement immobilisé, sans élasticité résiduelle, lorsque l'ensemble est fixé dans le réservoir.

Selon un premier aspect avantageux de l'invention, l'ensemble comprend des moyens d'immobilisation du corps secondaire sur le fond du réservoir, lorsque le corps principal est en place dans le réservoir.

Selon un premier mode de réalisation avantageux de l'invention, le corps secondaire est relié au corps principal au moyen d'une pièce de liaison souple fixée au corps principal et au corps secondaire. Selon un second mode de réalisation avantageux de l'invention, le corps secondaire est relié au corps principal au moyen d'une pièce de liaison articulée sur le corps principal et/ou sur le corps secondaire. Dans les deux cas, on peut prévoir que le corps secondaire et la pièce de liaison forment une seule pièce.

Selon un autre aspect avantageux de l'invention, la pièce de liaison est apte à être montée sur le corps principal et/ou sur le corps secondaire selon des orientations différentes. Cet aspect de l'invention permet d'adapter la conformation de l'ensemble de pompage à la géométrie du réservoir, c'est-à-dire d'utiliser un unique ensemble de pompage avec plusieurs types de réservoirs.

Selon un autre aspect avantageux de l'invention, la pièce de liaison est creuse et constitue une canalisation de circulation du carburant. Cette double fonction de la pièce de liaison induit un gain de place et une baisse du prix de revient de l'ensemble.

Selon un autre aspect avantageux de l'invention, le corps secondaire porte des moyens de mesure de niveau de carburant dans le réservoir qui comprennent un flotteur monté sur un bras articulé sur un élément de mesure fixe par rapport au corps secondaire. Grâce à cet aspect de l'invention, l'ensemble des moyens de mesure ou de jaugeage du niveau de carburant peuvent être déportés à l'extérieur du volume défini au droit du trou de bonde. Avantageusement, le bras à l'extrémité duquel est monté le flotteur est rectiligne. On peut également prévoir que le corps secondaire porte un crochet élastique de verrouillage du bras en position de transport et/ou de stockage. Avantageusement, le crochet constitue une butée à la course du bras à l'intérieur du réservoir.

L'invention a également trait à un réservoir de carburant pour véhicule automobile qui comprend un ensemble de pompage tel que précédemment décrit. Un tel réservoir peut être plus compact et avoir un trou de bonde de dimensions plus réduites de ceux de l'art antérieur, ce qui améliore sa rigidité et sa capacité à être incorporé dans la structure d'un véhicule automobile.

L'invention sera mieux comprise et d'autres avantages de celle-ci apparaîtront plus clairement à la lumière de la description qui va suivre de cinq modes de réalisation d'un ensemble de pompage de carburant conforme à son principe, donnée uniquement à titre d'exemple et faite en référence aux dessins annexés dans lesquels :
- la figure 1 est une représentation schématique de principe d'un ensemble de pompage conforme à l'invention installé dans un réservoir de carburant ;
- les figures 2A à 2D sont des représentations schématiques de principe des phases d'introduction de l'ensemble de pompage de la figure 1 à l'intérieur du réservoir ;
- la figure 3 est une vue en perspective d'une partie de l'ensemble de pompage des figures 1 et 2 ;
- la figure 4 est une vue analogue à la figure 3 pour un ensemble conforme à un second mode de réalisation de l'invention ;
- la figure 5 est une vue analogue à la figure 3 pour un ensemble de pompage conforme à un troisième mode de réalisation de l'invention ;
- la figure 6 est une vue de côté d'un ensemble conforme à un quatrième mode de réalisation de l'invention ;
- la figure 7 est une vue partielle de dessus de l'ensemble de la figure 6 ;
- la figure 8 est une vue analogue à la figure 3 pour un ensemble conforme à un cinquième mode de réalisation de l'invention ;
- la figure 9 est une coupe du dispositif de la figure 8 dans le plan IX-IX et
- les figures 10A à 10D sont des représentations schématiques de principe analogues aux figures 2A à 2D pour un ensemble de pompage conforme à l'art antérieur.

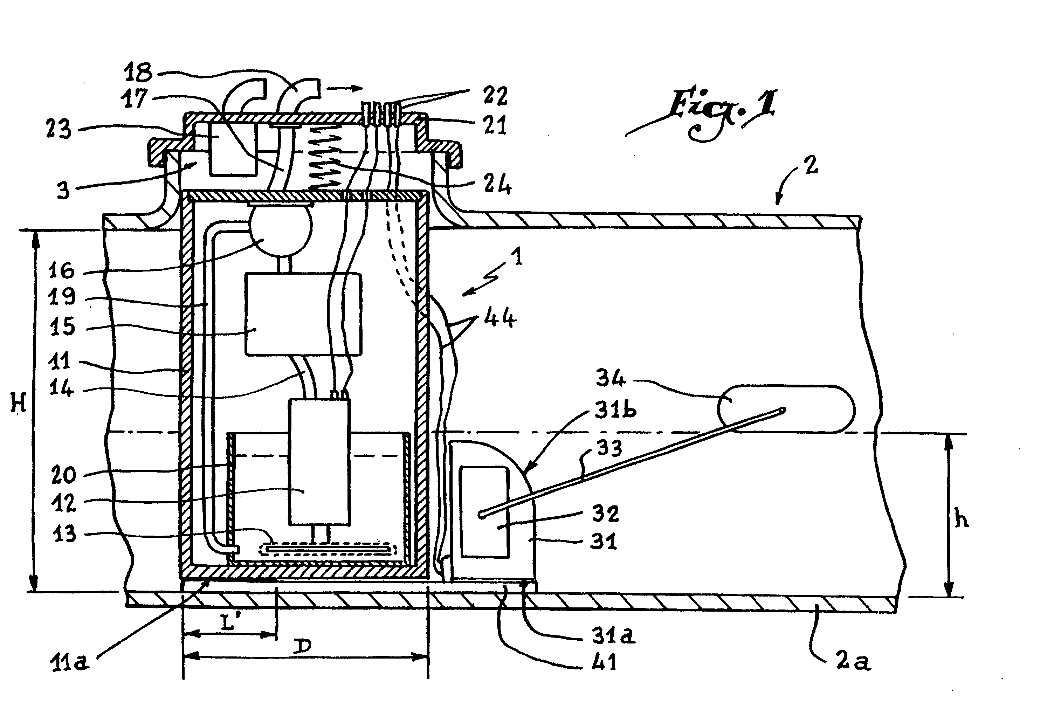

L'ensemble de pompage 1 représenté à la figure 1 est destiné à être disposé à l'intérieur d'un réservoir 2 de carburant d'un véhicule automobile mû par un moteur à combustion interne. Le réservoir 2 est pourvu d'un orifice ou trou de bonde 3 à travers lequel l'ensemble 1 peut être mis en place dans le réservoir 2. On suppose que cet orifice 3 est à section globalement circulaire et l'on note D son diamètre. On note H la hauteur intérieure du réservoir 2 en regard de l'orifice 3. On note V le volume de section horizontale égale à celle de l'orifice 3 et de hauteur H situé dans le réservoir 2 au droit de l'orifice 3. Dans le cas d'un orifice 3 à section circulaire, le volume V est un cylindre de hauteur H et de diamètre D.

L'ensemble 1 comprend un corps principal 11 prévu pour être disposé dans le réservoir 2 à l'intérieur du volume V. Ce corps principal renferme une pompe 12 d'aspiration du carburant, à travers une crépine 13, et de refoulement, à travers un conduit 14 et un filtre 15, en direction d'un clapet de décharge 16 agissant comme régulateur de pression et pourvu d'un conduit de sortie 17 relié à une tubulure de sortie 18 du carburant. Le clapet 16 est également connecté à un conduit de retour 19 en direction d'un bac 20 formant réserve de carburant autour de la crépine 13.

Une platine 21 est prévue pour obturer l'orifice 3, la tubulure 18 étant formée dans cette platine qui comprend également des moyens 22 de connexion électrique entre l'extérieur du réservoir et les appareillages électriques de l'ensemble 1, tels que la pompe 12. Un dispositif 23 est également monté sur la platine 21 pour permettre la mise à l'air du réservoir 2, c'est-à-dire éviter qu'une surpression ou une dépression ne règne à l'intérieur du réservoir 2.

Un ressort de compression 24, logé entre la platine 21 et le corps 11, exerce sur ce dernier un effort dirigé vers le fond 2a du réservoir 2.

Conformément à l'invention, un corps secondaire 31 est disposé dans le réservoir 2 à l'extérieur du volume V. Ce corps 31 porte les moyens de jaugeage ou de mesure du niveau de carburant à l'intérieur du réservoir 2. Plus précisément, un rhéostat 32 est monté dans le corps 31 alors qu'un bras sensiblement rectiligne 33 est articulé sur le rhéostat 32 et porte, à son extrémité éloignée du rhéostat 32, un flotteur 34 dont la hauteur h par rapport au fond 2a du réservoir 2 dépend de la quantité de carburant présent dans le réservoir.

Le corps secondaire est articulé par rapport au corps principal. En d'autres termes, le corps secondaire est cinématiquement lié au corps principal, mais est susceptible de se déplacer par rapport au corps principal.

Pour ce faire, une plaque souple 41 est fixée sous le fond 11a du corps principal 11 et sous la face inférieure 31a du corps principal 31, cette plaque souple étant reliée au corps 11 sur une partie L' seulement de la largeur L du corps 1.

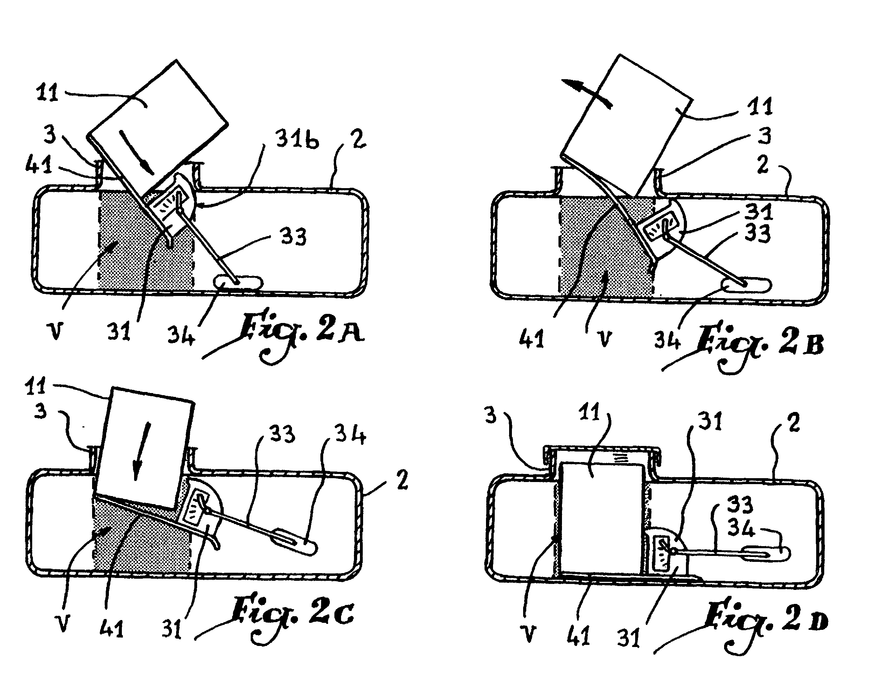

Ainsi, et comme il ressort plus clairement de la figure 2, lors de l'introduction de l'ensemble 1 à l'intérieur du réservoir 2, le corps 31 est susceptible d'être écarté du corps 11, notamment dans la position de la figure 2B, de sorte que le corps 11 peut être introduit dans le volume V selon une direction F globalement perpendiculaire à l'orifice 3 telle que représentée à la figure 2C. L'encombrement total du corps 11 peut alors être sensiblement égal au volume V défini au droit de l'orifice 3.

Ainsi, le caractère souple de la plaque de liaison 41 permet l'escamotage du corps secondaire 31 lors de l'introduction, mais également lors de la dépose de l'ensemble 1 dans le réservoir 2 à travers le trou de bonde 3. En outre, lorsque l'ensemble 1 est en position dans le réservoir 2 dans la position des figures 1 et 2D, le ressort 24 exerce sur le corps 11 un effort dirigé vers le bas qui résulte dans un coincement de la plaque 41 entre le fond 11a du corps 11 et le fond 2a du réservoir 2, de sorte que le corps secondaire 31 est immobilisé sur le fond du réservoir 2a car aucun débattement de la plaque 41 n'est possible.

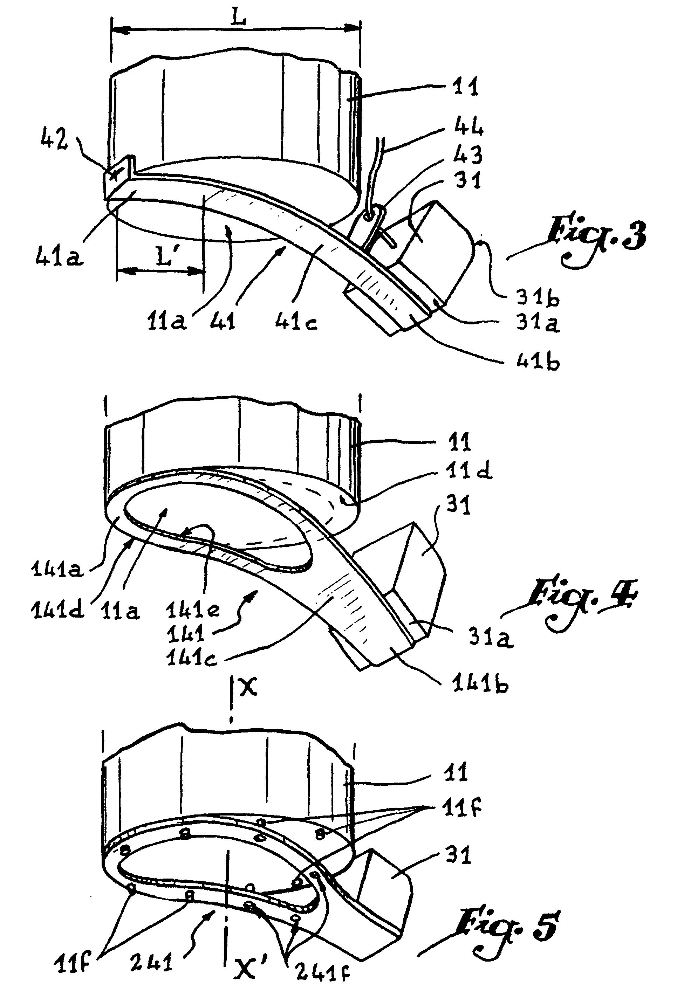

Comme il ressort plus clairement de la figure 3, la plaque 41 comprend une partie 41a fixée, par exemple, au moyen d'une vis 42 à proximité ou sur le fond 11a du corps principal 11. Une seconde partie 41b de la plaque de liaison 41 est fixée sous le corps 41 par tout moyen adéquat et une partie souple 41c est prévue dans une zone intermédiaire de la plaque 41. Cette plaque 41 peut être fabriquée en métal ou en matière plastique moulée.

La plaque 41 porte également un cavalier 43 dans lequel passent des câbles 44 d'alimentation électrique du rhéostat 32. Ce cavalier garantit un positionnement adéquat des câbles 44 lors des mouvements relatifs du corps 31 et du corps 11, sans risque de coincement des câbles 44 entre la plaque 41 et le fond du corps 11. On note également que le corps 31 a une surface extérieure bombée 31b qui ne présente pas d'aspérité ou d'irrégularité, ce qui facilite l'escamotage du corps 31 lors de l'introduction ou de la dépose de l'ensemble 1 à l'intérieur du réservoir 2. En fait, la surface 31b peut venir en appui contre le bord de l'orifice 3 ou contre une nervure interne du réservoir 2 sans risque de coincement.

On note que le bras 33 est sensiblement rectiligne, ce qui est particulièrement simple à produire industriellement. Le fait que le dispositif de jaugeage est disposé à l'extérieur du volume V évite de recourir à des bras de forme complexe. L'invention procure donc un avantage de simplicité de fabrications de ce bras, garant d'une précision accrue et d'un faible coût de production. En outre, le dispositif de mesure, qui comprend essentiellement le rhéostat 32, est positionné à proximité du fond 2a du réservoir 2, ce qui est la meilleure position pour obtenir une précision du jaugeage optimale lorsque le réservoir ne contient que peu de carburant, c'est-à-dire lorsque le flotteur 34 est à proximité du fond 2a.

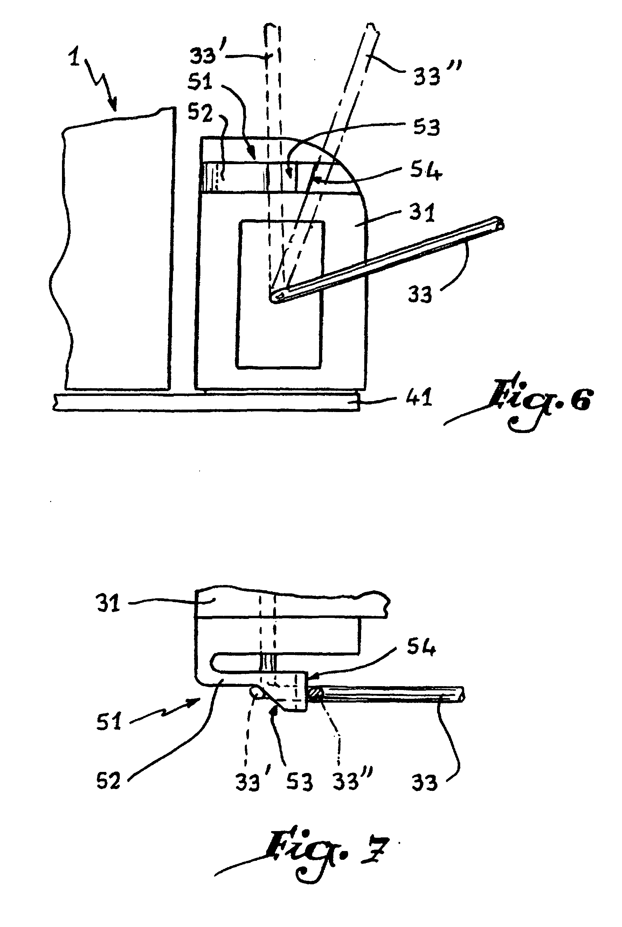

Dans le mode de réalisation représenté à la figure 4, une plaque de liaison 141 est pourvue d'une partie 141a destinée à être fixée par tout moyen par rapport au corps principal 11, alors qu'une partie 141b est prévue pour être fixée par tout moyen sous le corps secondaire 31. Une partie centrale souple 141c est prévue. Le bord externe 141d de la plaque 141 a une géométrie analogue au bord inférieur 11d du corps principal 11. La plaque 141 est pourvue d'une ouverture centrale 141e, ce qui lui confère une souplesse adaptée à sa fonction, notamment dans le cas d'une plaque 141 métallique. La géométrie de la plaque 141 permet un appui stable du fond 11a du corps 11 sur le fond 2a du réservoir 2, car le corps principal 11 est soutenu par la plaque 141 sur toute sa périphérie définie par le bord 11d.

Dans le mode de réalisation de la figure 5, une plaque 241 est réalisée en matière plastique et constitue une seule pièce avec le corps secondaire 31. La plaque 241 comprend plusieurs orifices 241f de réception de pions 11f prévus sous le fond 11a du corps principal 11. On comprend qu'il est possible de positionner la plaque 241 dans différentes positions autour d'un axe central XX' du corps 11, de façon à orienter le corps secondaire 31 dans différentes directions, en fonction de la géométrie du réservoir 2. On peut également prévoir que seuls certains des pions 11f sont utilisés pour la fixation de la plaque 241 à la partie inférieure du corps principal 11, par exemple par sertissage, alors que les autres pions conservent des dimensions transversales permettant le débattement de la plaque 241f.

Le fait que la position relative des corps 11 et 31 peut être modifiée par rotation de la plaque de liaison autour de l'axe XX' permet de respecter l'orientation du corps 11 par rapport à la platine 21 et aux moyens de connexion qu'elle porte, tout en autorisant une adaptation de la position du dispositif de jaugeage à la conformation réelle du réservoir.

Bien entendu, d'autres moyens de fixation des plaques 41, 141 et 241 sur le corps 11 peuvent être envisagés en fonction des matériaux utilisés et notamment le rivetage, le vissage, le sertissage, la soudure, le collage, l'agrafage, l'encliquetage, etc...

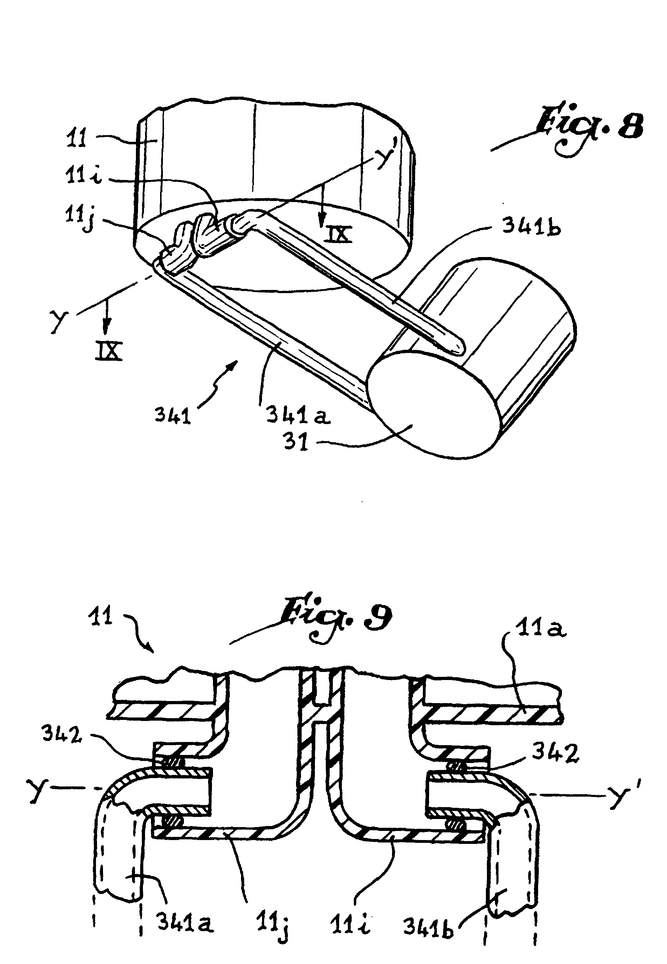

Dans le mode de réalisation de l'invention représenté à la figure 6, le corps secondaire 31 porte un crochet 51 permettant une fixation provisoire du bras 33 dans la position représentée en traits mixtes qui correspond au transport et/ou au stockage de l'ensemble 1 avant son introduction dans le réservoir 2. Ce maintien du bras 33 dans une position 33' globalement verticale évite la détérioration du dispositif de jaugeage pendant le transport et permet un gain de place avantageux pour l'emballage et le stockage. Le crochet 51 est constitué par l'extrémité d'une languette élastique 52 et comprend une première face 53, inclinée, contre laquelle vient en appui le bras 33 dans la position 33' représentée en traits pointillés. Lorsqu'il est opportun d'introduire l'ensemble 1 dans le réservoir 2, une pression légère exercée sur le crochet 51 permet de faire passer le bras 33 de la position représentée en traits mixtes à la position représentée en traits pleins pour effectuer la séquence représentée à la figure 2.

Le crochet 51 porte une seconde face 54, perpendiculaire au plan dans lequel se déplace le bras 33 du fait des variations de niveau de carburant à l'intérieur du réservoir 2. Ainsi, la seconde face 54 constitue une butée aux mouvements du bras 33 qui peut au plus parvenir à la position 33" représentée en traits mixtes à la figure 6. L'accrochage du bras 33 en position verticale 33' de transport ne peut se faire que par une action extérieure, en comprimant la languette 52, de façon à effacer le crochet 51. Un tel accrochage ne peut donc pas se produire en fonctionnement normal. A l'inverse, la face inclinée 53 constitue un obstacle suffisant en matière de transport mais il suffit à l'opérateur, qui effectue la pose de l'ensemble dans le réservoir, de tirer sur le bras 33 dans un mouvement de rotation vers le bas pour le mettre en position de fonctionnement.

Compte tenu de la séquence d'introduction de l'ensemble 1 à l'intérieur du réservoir telle qu'elle ressort de la figure 2, il n'est pas possible d'introduire cet ensemble à l'intérieur du réservoir sans avoir déplacé le bras 33 de sa position de transport 33' vers sa position active représentée en traits pleins à la figure 6.

La face 54 peut avantageusement être utilisée comme une butée de fin course du bras 33 et de son flotteur 34 à l'intérieur du réservoir 2 pour que ce dernier ne vienne pas percuter la face supérieure du réservoir sous l'effet des mouvements de carburant lors du déplacement du véhicule. En effet, de tels chocs seraient sources de bruit et d'usure du flotteur.

L'invention a été décrite avec un corps secondaire 31 qui supporte le dispositif de jaugeage du carburant. Cependant, d'autres composants de l'ensemble de pompage peuvent être disposés dans ce corps 31, tels que par exemple un filtre, un régulateur de pression, une crépine ou une pompe.

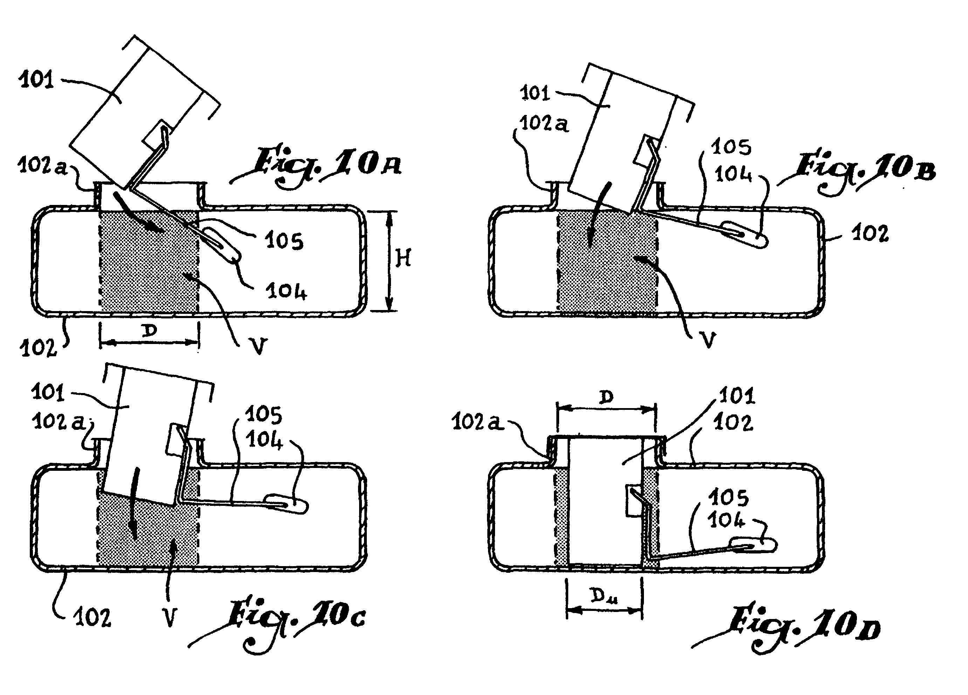

Dans le mode de réalisation de l'invention représenté aux figures 8 et 9, une crépine est disposée à l'intérieur du corps secondaire 31 qui est relié au corps principal 11 grâce à une pièce de liaison 341 constituée de deux tubulures 341a et 341b respectivement connectées et articulées dans des raccords 11g et 11i disposés sous le fond 11a du corps principal 11. Un joint 342 peut être prévu autour des extrémités des tubulures 341a et 341b dans les raccords 11g et 11i, de sorte que du carburant peut circuler dans les tubulures 341a et 341b depuis le corps secondaire 341 vers le corps principal 11 et, éventuellement, en sens inverse. Les tubulures 341a et 341b sont susceptibles d'un mouvement de rotation autour d'un axe YY' parallèle au fond 11a du corps principal 11, ce qui permet l'escamotage du corps 31 lors de l'introduction de l'ensemble dans le réservoir ou lors de sa dépose.

La pièce 341 pourrait également être articulée sur le corps secondaire 31.

## Revendications

1. Ensemble de pompage de carburant à l'intérieur d'un réservoir de véhicule automobile, dans lequel il est introduit par un orifice, ledit ensemble comprenant un corps principal (11), prévu pour être logé dans un volume de réception (V) défini au droit dudit orifice (3), et un corps secondaire (31), prévu pour être logé dans le réservoir (2) à l'extérieur dudit volume de réception et portant des moyens (32-34) de mesure du niveau de carburant dans le réservoir, **caractérisé en ce que** le corps secondaire (31) est articulé par rapport au corps principal (11), de telle sorte qu'il peut être escamoté lors de l'introduction ou lors de la dépose dudit ensemble (1) dans ledit réservoir (2), ledit corps secondaire étant apte à être immobilisé par ledit corps principal contre le fond (2a) dudit réservoir (2).

2. Ensemble de pompage selon la revendication 1, **caractérisé en ce qu'**il comprend des moyens (24, 41 ; 141 ; 241 ; 341) d'immobilisation du corps secondaire (31) sur le fond (2a) du réservoir (2), lorsque ledit corps principal (11) est en place dans ledit réservoir (2).

3. Ensemble de pompage selon l'une des revendications 1 ou 2, **caractérisé en ce que** le corps secondaire (31) est relié au corps principal (11) au moyen d'une pièce de liaison souple (41 ; 141 ; 241) fixée audit corps principal (11) et audit corps secondaire.

4. Ensemble de pompage selon l'une des revendications 1 ou 2, **caractérisé en ce que** le corps secondaire (31) est relié au corps principal (11) au moyen d'une pièce de liaison (341) articulée (YY') sur ledit corps principal et/ou sur ledit corps secondaire.

5. Ensemble de pompage selon l'une des revendications 3 ou 4, **caractérisé en ce que** le corps secondaire (31) et la pièce de liaison (241) forment une seule pièce.

6. Ensemble de pompage selon l'une des revendications 3 à 5, **caractérisé en ce que** la pièce de liaison (241) est apte à être montée sur le corps principal (11a) et/ou sur le corps secondaire selon des orientations différentes (XX').

7. Ensemble de pompage selon l'une des revendications 3 à 6, **caractérisé en ce que** la pièce de liaison (341) est creuse et constitue une canalisation (341a, 341b) de circulation du carburant.

8. Ensemble de pompage selon l'une des revendications précédentes, **caractérisé en ce que** lesdits moyens (32-34) de mesure du niveau de carburant dans le réservoir (2) comprennent un flotteur (34) monté sur un bras (33) articulé sur un élément de mesure (32) fixe par rapport au corps secondaire.

9. Ensemble de pompage selon la revendication 8, **caractérisé en ce que** ledit bras (33) est rectiligne.

10. Ensemble de pompage selon l'une des revendications 8 ou 9, **caractérisé en ce que** ledit corps secondaire (31) porte un crochet (51) élastique de verrouillage dudit bras en position de transport et/ou de stockage (33').

11. Ensemble de pompage selon la revendication 10, **caractérisé en ce que** ledit crochet (51) constitue une butée (54) à la course dudit bras (33) à l'intérieur du réservoir (2).

12. Réservoir (2) de carburant pour véhicule automobile, **caractérisé en ce qu'**il comprend un ensemble de pompage (1) selon l'une des revendications précédentes.

## Patentansprüche

1. Kraftstoff-Pumpenanordnung im Inneren eines Kraftfahrzeugtanks, in welchen sie durch eine Öffnung eingeführt wird, wobei die Anordnung einen Hauptkörper (11), welcher zum Unterbringen in einem Aufnahmevolumen (V) vorgesehen ist, welches in einer geraden linie der Öffnung (3) festgelegt ist, und einen Nebenkörper (31) aufweist, welcher zum Unterbringen in dem Tank (2) außerhalb des Aufnahmevolumens vorgesehen ist und Meßeinrichtungen (32 - 24) für das Kraftstoffniveau in dem Tank trägt, **dadurch gekennzeichnet, daß** der Nebenkörper (31) in Bezug auf den Hauptkörper (11) derart gelenkig angebracht ist, daß er in dem Tank (2) während des Einführens oder während des Abnehmens der Anordnung (1) verschwinden kann, wobei der Nebenkörper in der Lage ist, durch den Hauptkörper gegenüber dem Boden (2a) des Tanks (2) unbeweglich zu sein.

2. Pumpenanordnung nach Anspruch 1, **dadurch gekennzeichnet, daß** sie Einrichtungen (24, 41; 141; 241; 341) zum Unbeweglichmachen des Nebenkörpers (31) auf dem Boden (2a) des Tanks (2) aufweist, wenn sich der Hauptkörper (11) an seinem Platz in dem Tank (2) befindet.

3. Pumpenanordnung nach einem der Ansprüche 1 oder 2, **dadurch gekennzeichnet, daß** der Nebenkörper (31) mit dem Hauptkörper (11) mittels eines biegsamen Verbindungsstücks (41; 141; 241) verbunden ist, welches an dem Hauptkörper (11) und an dem Nebenkörper befestigt ist.

4. Pumpenanordnung nach einem der Ansprüche 1 oder 2, **dadurch gekennzeichnet, daß** der Nebenkörper (31) an dem Hauptkörper (11) mittels eines Verbindungsstücks (341) verbunden ist, welches gelenkig (YY') an dem Hauptkörper und/oder an dem Nebenkörper angebracht ist.

5. Pumpenanordnung nach einem der Ansprüche 3 oder 4, **dadurch gekennzeichnet, daß** der Nebenkörper (31) und das Verbindungsstück (241) aus einem einzigen Stück gebildet sind.

6. Pumpenanordnung nach einem der Ansprüche 3 bis 5, **dadurch gekennzeichnet, daß** das Verbindungsstück (241) dazu geeignet ist, an dem Hauptkörper (11a) und/oder an dem Nebenkörper gemäß unterschiedlichen Orientierungen (XX') angebracht zu werden.

7. Pumpenanordnung nach einem der Ansprüche 3 bis 6, **dadurch gekennzeichnet, daß** das Verbindungsstück (341) hohl ist und eine Rohrleitung (341a, 341b) zum Umwälzen des Kraftstoffs bildet.

8. Pumpenanordnung nach einem der vorhergehenden Ansprüche, **dadurch gekennzeichnet, daß** die Einrichtungen (32 - 34) zum Messen des Kraftstoffniveaus in dem Tank (2) einen Schwimmer (34) aufweisen, welcher an einem Arm (33) befestigt ist, der gelenkig an einem in Bezug auf den Nebenkörper fixierten Meßelement (32) angebracht ist.

9. Pumpenanordnung nach Anspruch 8, **dadurch gekennzeichnet, daß** der Arm (33) geradlinig ist.

10. Pumpenanordnung nach einem der Ansprüche 8 oder 9, **dadurch gekennzeichnet, daß** der Nebenkörper (31) einen elastischen Haken (51) zum Verriegeln des Arms in der Transport- und/oder Lagerposition (33') trägt.

11. Pumpenanordnung nach Anspruch 10, **dadurch gekennzeichnet, daß** der Haken (51) im Verlauf des Arms (33) im Inneren des Tanks (2) einen Anschlag (54) bildet.

12. Kraftstofftank (2) für ein Kraftfahrzeug, **dadurch gekennzeichnet, daß** er eine Pumpenanordnung (1) gemäß einem der vorhergehenden Ansprüche aufweist.

## Claims

1. Arrangement for pumping fuel inside a motor vehicle tank, into which it is introduced through an orifice, the said arrangement comprising a main body (11), designed to be housed in a receiving volume (V) defined in line with the said orifice (3), and a secondary body (31), designed to be housed in the tank (2) outside the said receiving volume and bearing means (32-34) for measuring the fuel level in the tank, **characterized in that** the secondary body (31) is articulated with respect to the main body (11) so that it can be retracted when the said arrangement (1) is being introduced into or removed from the said tank (2), the said secondary body being able to be immobilized by the said main body against the bottom (2a) of the said tank (2).

2. Pumping arrangement according to Claim 1, **characterized in that** it comprises means (24, 41; 141; 241; 341) for immobilizing the secondary body (31) on the bottom (2a) of the tank (2) when the said main body (11) is in place in the said tank (2).

3. Pumping arrangement according to either of Claims 1 and 2, **characterized in that** the secondary body (31) is connected to the main body (11) by means of a flexible connecting piece (41; 141; 241) fixed to the said main body (11) and to the said secondary body.

4. Pumping arrangement according to either of Claims 1 and 2, **characterized in that** the secondary body (31) is connected to the main body (11) by means of a connecting piece (341) articulated (YY') to the said main body and/or to the said secondary body.

5. Pumping arrangement according to either of Claims 3 and 4, **characterized in that** the secondary body (31) and the connecting piece (241) form a single piece.

6. Pumping arrangement according to one of Claims 3 to 5, **characterized in that** the connecting piece (241) is designed to be mounted on the main body (11a) and/or on the secondary body in different orientations (XX').

7. Pumping arrangement according to one of Claims 3 to 6, **characterized in that** the connecting piece (341) is hollow and constitutes a pipe (341a, 341b) through which fuel can circulate.

8. Pumping arrangement according to one of the preceding claims, **characterized in that** the said means (32-34) for measuring the fuel level in the tank (2) comprise a float (34) mounted on an arm (33) articulated to a measuring element (32) that is stationary with respect to the secondary body.

9. Pumping arrangement according to Claim 8, **characterized in that** the said arm (33) is straight.

10. Pumping arrangement according to either of Claims 8 and 9, **characterized in that** the said secondary body (31) carries an elastic hook (51) for locking the said arm in a transport and/or storage position (33').

11. Pumping arrangement according to Claim 10, **characterized in that** the said hook (51) constitutes a limit stop (54) for the travel of the said arm (33) inside the tank (2).

12. Motor vehicle fuel tank (2), **characterized in that** it comprises a pumping arrangement (1) according to one of the preceding claims.
